Europäisches Patentamt

**European Patent Office**

**Office européen des brevets**

(11) Publication number: **0 018 828**
A1

(12) # EUROPEAN PATENT APPLICATION

(21) Application number: **80301429.9**

(22) Date of filing: **01.05.80**

(51) Int. Cl.³: **F 16 L 27/08**

(30) Priority: **05.05.79 GB 7915732**

(43) Date of publication of application:
**12.11.80 Bulletin 80/23**

(84) Designated Contracting States:
**AT BE CH DE FR GB IT LI LU NL SE**

(71) Applicant: **KEYMAT POWER SAFETY HYDRAULICS
LIMITED**
**Perry Avenue Teesside Industrial Estate**
**Thornaby Cleveland TS17 9LN(GB)**

(72) Inventor: **Fawcett, Keith Ernest**
**3 Orchard Close**
**Great Ayton North Yorkshire(GB)**

(74) Representative: **Dew, Melvyn John et al,**
**Haseltine Lake & Co Hazlitt House 28 Southampton**
**Buildings Chancery Lane**
**London WC2A 1AT(GB)**

(54) **Rotational joints.**

(57) A device for rotatably joining pipes together, comprises a sleeve (1) which at one end (2) is, in use, inserted in a first pipe (4) adapted to receive it, and at its other end (3) is coupled to or integral with a second pipe. The inserted portion of the sleeve (1) has a high pressure sealing means (6) to seal between the outer surface of the sleeve and the inner surface of the first pipe (4). It also has a rolling element axial thrust bearing (7) extending between the outer surface of the sleeve (1) and the inner surface of the first pipe (4) to permit relative rotation of the first pipe (4) and the sleeve (1) even when axial forces are applied. The device further includes means (10, 16) for preventing axial movement of the sleeve (1), the first pipe (4) and the thrust bearing (7) relative to each other.

EP 0 018 828 A1

-1-

## ROTATIONAL JOINTS

This invention relates to rotational pipe joints, that is to devices for joining pipe bodies together in a manner which permits relative rotation thereof. The invention is particularly but not exclusively concerned with such devices which are sealed with regard to the escape of high pressure fluids (gas or liquid) which may be contained within the pipe bodies, and with regard to the ingress of fluids (which may or may not be at high pressure) or solid particles from the environment outside the pipe bodies.

Rotational pipe joints intended for low pressure applications are well known, but when it is required to couple pipes which are intended to carry high pressure fluids, such as may be used in the oil drilling industry, difficulties are often encountered. Thus the high pressure fluid passing through the pipes exerts an axial force which tends to separate the pipes. Accordingly, not only must the joints be capable of sealing the high pressure fluid within the pipes and permitting rotation thereof, it must be capable of carrying out these functions simultaneously i.e. it must be capable of permitting relative rotation of the pipes whilst being subjected to the axial forces generated by the high pressures.

One known type of rotational joint comprises a pair of male and female sleeves which each have a groove to accommodate bearing balls. To assemble such a joint, the sleeves are fitted one within the other, and when the respective grooves are opposite each other, balls are inserted through a hole in the outer sleeve to fill the opposed grooved and form the ball train. This ball train holds together the two sleeves, and hence the pipes to which the sleeves are attached, and permits rotation of one sleeve within the other. For many applications, the end of the inner sleeve is provided with a seal pack. In use, the non-mating ends of the male and female sleeves are, for example, welded into place on the pipes which are to be joined, usually before the sleeves have been mated and the balls inserted. In this case it has been found that, although the grooves may have been hardened and tempered initially, in certain circumstances the high temperatures which are involved in the welding stage lead to deformation of the grooves which may lead to failures in use. A further disadvantage is that in general, by virtue of the axial forces which act on them in use, these joints will not rotate whilst under pressure. Thus the pressure within the pipe system must be released before rotation can take place. A development of this type of joint comprises a pair of grooves in each of the male and female sleeves, with a corresponding pair of ball trains when the sleeves are mated.

In view of the above it is desirable to provide a rotational joint in which the rotational bearing will permit rotation under pressure and is not mounted in a position which has possibly been deformed by welding in adjacent sections.

According to the present invention there is provided a device for rotatably joining first and

second pipe bodies which comprises

(a) a sleeve (1) having a first portion (2) adapted for insertion into the first pipe body (4), and a second portion (3) adapted for coupling to, or integral with, the second pipe body;

(b) a high pressure sealing means (6) positionable for reaction between the outer surface of the sleeve and the inner surface of the first pipe body which serves, both when the sleeve and first pipe body are relatively stationary and when they are in a condition of relative rotation to prevent leakage of high pressure fluid contained within the pipe bodies;

(c) a rolling element axial thrust bearing (7) positionable between the outer surface of the sleeve and the inner surface of the first pipe body to permit relative rotation of the first pipe body and the sleeve whilst the first pipe body and sleeve are subjected to an axial force; and

(d) means (10, 16) for limiting axial movement of the sleeve, the first pipe body and the thrust bearing relative to each other.

Preferably the high pressure sealing means and/or the axial thrust bearing is/are carried on the sleeve.

In a preferred embodiment the high pressure sealing means is located at a position remote from the second sleeve portion, and the axial thrust bearing is located between the high pressure sealing means and the second sleeve portion. It is preferred that the high pressure sealing means is formed from a material of very low sticktion such as polytetrafluoroethylene (PTFE) and preferably comprises at least two PTFE sealing rings, preferably in combination with a PTFE bearing ring. These rings may, for example, be seated in grooves in the outer surface of the sleeve or in the inner surface of the first pipe body. In this preferred embodiment the PTFE sealing rings serve to prevent the flow of high pressure fluid contained within the pipe system to the region of the thrust bearing. The greater the number of sealing rings at this

-4-

position, the less the risk that such leakage will occur. In a particularly preferred form each of the pair of PTFE sealing rings is carried in a groove in the outer surface of the sleeve, and is urged outwardly of the groove against the inner surface of the first pipe body by means of an O-ring carried in the bottom of the groove. Alternatively, each ring is carried in a groove in the inner surface of the first pipe body, and is urged outwardly of the groove against the outer surface of the sleeve by means of an O-ring carried in the bottom of the groove. With these configurations, a single seal has been found to prevent leakage, with the other seal of the pair being used as a sleeper which functions only when the first seal fails. Provided that the high pressure fluid is non-corrosive with regard to the thrust bearing, the high pressure seal may be located between the axial thrust bearing and the second sleeve portion, although this is not preferred. The use of PTFE high pressure seals is particularly preferred because of the extremely low torque which is produced on rotation under pressure, this being as a result of the low sticktion between the PTFE and the pipe body surface.

The rolling element thrust bearing which is incorporated in the device may be, for example, a standard three-part roller cross race all steel bearing. Such a bearing permits transfer of axial forces without substantially reducing the ease with which the roller elements permit relative rotation of the first pipe body and the sleeve.

In another preferred embodiment the means for preventing axial movement of the sleeve, the first pipe body and the thrust bearing relative to each other comprises two abutment members located respectively axially at each side of the thrust bearing. The respective abutment members are axially located respectively in the sleeve and the first pipe body so as to prevent the undesirable axial movement. For example one of the abutment members may be in the form of a two part split ring disposed in a groove provided at an appropriate position in the sleeve. Thus in assembling the device the axial thrust bearing may be slid onto the sleeve and the two part split ring inserted into its groove to secure the thrust bearing in position. For ease of handling during assembly, the two part split ring may be provided with an external groove to receive an O-ring, which O-ring prevents the split ring from slipping out of the groove and thus disintegrating during assembly.

The other abutment member which ensures that there is no axial movement in the joint may be, for example, in the form of another split ring adapted to suit a groove provided in the inner surface of the first pipebody. It has been found that for ease of assembly of the device in the first pipe body, a three-part split ring is desirable. In order to prevent such a three-part split ring from dropping out of its locating groove, the device may be provided with a loose fitting retaining ring which is secured in position on the end of the pipe body, for example by means of one or more screws.

In a particularly preferred embodiment of the invention, the device is provided with one or more load spreading members each arranged between the outer surface of the sleeve and the inner surface of the first pipe body. Such a member may also serve as part of the means for preventing axial movement in the joint. Preferably the device has first and second load spreading members, the first being disposed between the axial thrust bearing and the second sleeve portion, and the second being disposed ajacent the axial thrust bearing and remote from the second sleeve portion.

It is preferred that the device is provided with a second sealing means for preventing ingress of fluids or particles to the thrust bearing from outside the pipe bodies. For example this second sealing means may be arranged in use for reaction between the outer surface of the sleeve and the inner surface of the first load spreading member, and between the inner surface of the first pipe body and the outer surface of the first load spreading member. Preferably, the first load spreading member is provided with an external O-ring seated in a groove, which O-ring seals between the member and the inner surface of the pipe body, and with a PTFE seal inserted in a groove, which seals between the member and the outer surface of the sleeve.

In embodiments where the second sealing means is provided then it is preferred to include a hydrodynamic sealing barrier between the second sealing means and the high pressure seals. This is particularly useful where the pipe bodies carry a high pressure gas, since the barrier which is injected into the joint serves by its pressure to prevent the otherwise almost inevitable slight leakage of gas past the high pressure seals.

The device also preferably has one or more radial thrust bearings to take up radial loads between the sleeve and the first pipe body. Use may be made of the load spreading members in this regard to prevent movement between the sleeve and the first pipe body when they are subjected to radial forces. Accordingly the device is preferably provided with first and second radial thrust bearings, the first being arranged in use for reaction between the outer surface of the sleeve and the inner surface of the first load spreading member, and the second being arranged in use on the first sleeve portion for reaction between the inner surface of the first pipe body and the outer surface of the sleeve.

For example a plain PTFE bearing ring may be provided between the sleeve and the first load spreading member, and between the first sleeve portion and the first pipe body.

As may be deduced from the above discussion, the high pressure sealing means and/or the second sealing means and/or the radial thrust bearing is preferably formed from polytetrafluoroethylene. However it is also possible to use seals or bearing rings formed from a similar low sticktion polymer or non-elastomer. The provision of a non-elastomeric interface between the seal and the moving pipe surface means that there is no deformation with increasing pressure, and therefore the torque characteristic of the seal does not rise substantially with pressure but rather is largely constant throughout the whole operating range.

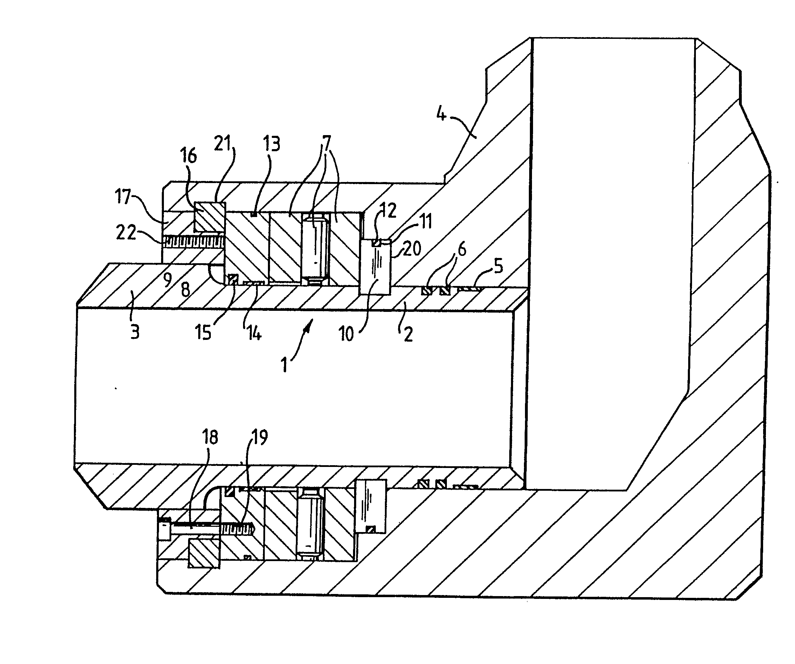

For a better understanding of the invention and to show how the same may be carried into effect, reference will now be made, by way of example, to the accompanying drawing which shows in cross-section a device according to the invention assembled in a pipe body in the form of an elbow.

In the drawing there is shown a sleeve 1 which is circular in transverse cross-section and which has a first portion 2 and a second portion 3, the first portion being inserted into a first pipe body which is in the form of an elbow pipe 4. The second portion 3 as shown is adapted for coupling to a second pipe body (not shown), for example by welding. Alternatively the portion 3 may simply be an integral part of the second pipe body. At the end of the sleeve which is remote from the second portion thereof there is provided a high pressure sealing means in the form of a pair of PTFE sealing rings 6; there is also provided a PTFE radial thrust bearing 5. Each bearing and sealing ring is located in a groove in the end of the sleeve, and forms a seal between the outer surface of the sleeve and the inner surface of the pipe 4. Disposed in the bottom of each of the grooves which carry the rings 6 is an

O-ring for urging the PTFE ring against the pipe body surface.

Also mounted on the first portion 2 of the sleeve is a thrust bearing 7 in the form of a 3-part roller cross race all steel bearing. This thrust bearing is secured in position on the sleeve by virtue of being in contact with a load spreading sealing member 8 which is itself adjacent a rounded shoulder 9 of the sleeve. At its other end, the thrust bearing 7 is secured in position by means of a two-piece split ring 10 which is disposed in another groove in the sleeve. This retaining ring 10 is provided with an external groove 11 for receiving an O-ring 12 to prevent the split ring disintegrating during assembly of the device. The load spreading sealing member 8 is provided with an external O-ring 13, mounted in a groove in the member, for sealing the space between the load spreading member and the inner surface of the pipe 4. The inner surface of the load spreading member 8 is provided with a pair of grooves to accommodate a plain PTFE radial thrust bearing ring 14, and with a PTFE sealing ring 15 which serves to seal the space between the outer surface of the sleeve and the inner surface of the load spreading member 8. By means of the elements 13 and 15, ingress of fluids or particulate material from outside the joint into the region of the thrust bearing is prevented. The elements 14 and 5 serve to take up radial forces applied to the system.

Axial movement of the thrust bearing and sleeve in a first direction with respect to the pipe 4 is prevented in the embodiment shown by means of an abutment member in the form of a three-part ring 16 disposed in a groove 21 in the pipe 4. To prevent the three-part ring 16 from disintegrating after its components have been inserted into the groove, there is provided a loose fitting retaining ring 17. The ring 17 has three plain holes 18 to coincide with tapped portions 19 in the member 8, and is secured in position in the end of the pipe 4 by means of three screws. Axial movement in the opposite direction is prevented by contact of the thrust bearing 7 against the split ring 10, which is itself in contact with shoulder 20 of the pipe 4.

To assemble the device as shown in the drawings,

0018828

for example after the second portion 3 has been welded to a second pipe body, the following procedures take place, after the loose fitting retaining ring 17 has been slipped over the second portion 3. The load spreading member 8, together with its sealing rings 13 and 15 and the radial thrust bearing ring 14 is slid onto the sleeve from the end remote from the second portion 3 until it is adjacent the rounded shoulder 9 of the sleeve. Thereafter the thrust bearing 7 is slid on to the sleeve in the same manner and the components of the two piece split ring 10 are inserted in the groove provided in the sleeve. To hold the split ring in position, the O-ring 12 is then placed around it in the groove 11. PTFE seals 6 and radial thrust bearing ring 5 are then placed in position in their respective grooves in the second portion 2, and the whole sleeve is then inserted into the elbow pipe 4. When the two-part split retaining ring 10 contacts the shoulder 20 of the pipe, the components of the three-part split ring 16 are inserted in the groove 21 in the pipe. To retain this three-part ring in position, the loose-fitting retaining ring 17 is then slid back down the second portion 3 until it is in a position to prevent the components of the three-part ring from dropping out of the groove. Three screws are then passed through the plain holes 18 and tightened into the threaded portions 19 in the member 8 to secure the retaining ring 17 in position.

When a high pressure fluid is carried in the pipe system, the PTFE seals 6 serve to prevent leakage of the fluid into the axial thrust bearing system. The axial forces which are generated by the high pressure fluid on the elbow pipe 4 tend to force the sleeve 1 from its position of insertion in the pipe 4. However the reaction of the retaining ring 16 against a wall of the groove 21 prevent the device from being forced out from the elbow. Similarly, the reaction of the retaining ring 10 in its groove in the sleeve prevents the sleeve 1 from being ejected. The three-part thrust bearing transmits the axial load without subjecting the rolling elements to such forces that they are unable to perform their rolling function. Thus the device according to the invention permits relative rotation of the sleeve and the pipe whilst the pipe contains fluids which are under pressure. In this regard the use of PTFE high pressure seals is advantageous because their low friction characteristics mean that they have a very low initial sticktion.

A feature of the device as shown in the drawing is its ease of assembly. Further, it is particularly easy to dismantle, for example to service or replace the thrust bearing or to replace old seals. To facilitate dis-assembly, the ring 17 is provided with tapped holes 22 which extend as far as the surface of the member 8. After first removing the screws which secure the ring 17 to the member 8 the simple act of tightening further screws into the holes 22 forces the ring 17 out of the end of the pipe. The three-part ring 16 is then readily removed and the device may be withdrawn from the first pipe body. Conveniently, the ring 17 is held away from the end of the pipe 4 by means of a spacer, and the screws are reinserted in the threaded portions 19 of the member 8 to facilitate withdrawal of the device. It has been found that such a method of dis-assembly is much simpler to carry out than, for example, removing a plurality of bearing balls from a hole in the outer pipe.

The feature of rotation under pressure is particularly advantageous in applications such as high pressure oil pipelines since it enables a degree of flexibility to be conferred on an otherwise rigid pipeline. By coupling together several joints incorporating devices according to the invention it is possible to take up linear movement in a pipeline without the two ends of the pipeline moving from an axially fixed position. Thus a pipeline system comprising a

pair of units, each of which comprises one device according to the invention in conjunction with two elbow pipes, is capable of a partial linear take up of linear movement, whilst three such units enables a complete linear take up of linear movement.

In the preferred embodiment wherein a second (external) sealing means is provided, the joints may be employed in pipelines which are for example submerged below sea level or are used in locations surrounded by an aggressive atmosphere, for example in steel smelting works. In such environments it is clearly desirable to protect the thrust bearing from attack by corrosive seawater or acidic or abrasive atmospheres. Further, the external seal serves to retain the thrust bearing lubrication and, in cases where such is employed, the material of the hydrodynamic sealing barrier. The manner in which the device is assembled means that worn thrust bearings and seals may readily be stripped out and replaced.

As may be seen from the above, the embodiment described may be used to connect two pieces of pipe where one pipe is required to move with respect to the other; in addition to the rotational movement which is permitted, the joint resists radial movement, and is able to take up linear movement (with the use of two or more such joints). One of the pipe ends must, of course, be adapted to receive the device, and the other pipe end must be adapted for coupling to, or be integral with, the device.

By way of example, joints according to the invention are capable of rotation when the pipes contain fluids under pressures of 210 bars, 520 bars or 650 bars. A particular embodiment has been produced which permits rotational joints in 6 inch diameter pipes to withstand 6,000 psi, although the design concept provides for sizes of, for example, up to 30 inch diameter joints at all standard pressure ratings.

CLAIMS:-                    -13-

1.      A device for rotatably joining first and second pipe bodies which comprises (a) a sleeve (1) having a first portion (2) adapted for insertion into the first pipe body (4), and a second portion (3) adapted for coupling to, or integral with, the second pipe body;
(b) a high pressure sealing means (6) positionable for reaction between the outer surface of the sleeve and the inner surface of the first pipe body which serves, both when the sleeve and first pipe body are relatively stationary and when they are in a condition of relative rotation to prevent leakage of high pressure fluid contained within the pipe bodies;
(c) a rolling element axial thrust bearing (7) positionable between the outer surface of the sleeve and the inner surface of the first pipe body to permit relative rotation of the first pipe body and the sleeve whilst the first pipe body and sleeve are subjected to an axial force; and
(d) means (10, 16) for limiting axial movement of the sleeve, the first pipe body and the thrust bearing relative to each other.

2.      A device according to claim 1 wherein the high pressure sealing means (6) and/or the axial thrust bearing (7) is/are carried on the sleeve (1).

3.      A device according to claim 2 wherein the high pressure sealing means (6) is carried on the first sleeve portion (2) at a position remote from the second sleeve portion (3), and the thrust bearing (7) is carried at a position between the high pressure sealing means and the second sleeve portion.

4.      A device according to any one of the preceding claims which includes a second sealing means (13, 15) for preventing ingress of fluids or particles to the thrust bearing (7) from outside the pipe bodies.

5. A device according to claim 4 wherein a hydrodynamic sealing barrier is provided between the second sealing means (13, 15) and the high pressure sealing means (6) to make the device rotatably gas tight.

6. A device according to any one of the preceding claims which includes one or more radial thrust bearings (5, 14) to take up radial loads between the sleeve (1) and the first pipe body (4).

7. A device according to any one of the preceding claims wherein the high pressure sealing means (6) and/or the second sealing means (13, 15) and/or the radial thrust bearing (5, 14) is formed from polytetrafluoroethylene.

8. A device according to claim 7 wherein the high pressure sealing means (6) comprises at least two polytetrafluoroethylene sealing rings.

9. A device according to claim 8 wherein each polytetrafluoroethylene sealing ring (6) is carried in a groove in the outer surface of the sleeve (1), and is urged outwardly of the groove against the inner surface of the first pipe body (4) by means of an O-ring carried in the bottom of the groove, or is carried in a groove in the inner surface of the first pipe body (4), and is urged outwardly of the groove against the outer surface of the sleeve (1) by means of an O-ring carried in the bottom of the groove.

10. A device according to any one of the preceding claims which includes one or more load spreading members (8) positionable between the outer surface of the sleeve (1) and the inner surface of the first pipe body (4).

0018828

## EUROPEAN SEARCH REPORT

**European Patent Office**

Application number

EP 80301429.9

| | DOCUMENTS CONSIDERED TO BE RELEVANT | | CLASSIFICATION OF THE APPLICATION (Int Cl. 3) |
|---|---|---|---|
| Category | Citation of document with indication, where appropriate, of relevant passages | Relevant to claim | |
| X | FR - A - 2 133 302 (ETABLISSE-MENTS CORDEL & CIE) <br> + Totality + <br> -- | 1-5,7,9 | F 16 L 27/08 |
| - | DE - B2 - 1 965 246 (AEROQUIP) <br> + Totality + <br> -- | 1-5,9 | |
| - | US - A - 3 799 589 (BOELKINS) <br> + Totality + <br> -- | 1-3,7,9 | |
| - | GB - A - 1 435 498 (E.C. LOVERING POCHIN & COMPANY LIMITED) <br> + Totality + <br> -- | 1-4,5 | **TECHNICAL FIELDS SEARCHED (Int.Cl. 3)** <br><br> F 16 L 27/00 |
| - | FR - A - 1 408 620 (SUPER OIL SEALS & GASKETS LIMITED) <br> + Totality + <br> -- | 1-4,5 | |
| A | DE - A - 2 405 231 (EKMAN) <br> + Fig. + <br> ---- | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

| X | The present search report has been drawn up for all claims | | |
|---|---|---|---|
| Place of search <br> VIENNA | Date of completion of the search <br> 23-06-1980 | Examiner <br> SCHUGANICH | |

EPO Form 1503.1   06.78